# NEW EUROPEAN PATENT SPECIFICATION

(11) **EP 0 478 957 B2**
(45) Date of publication and mention of the opposition decision: **05.08.1998**
(45) Mention of the grant of the patent: 05.04.1995
(21) Application number: 91114507.6
(22) Date of filing: 29.08.1991
(51) Int. Cl.: B29C 47/22

(54) **Device for controlling the radial extrusion thickness of thermoplastic polymers**
Vorrichtung zum Steuern des radialen Extrusionsdurchmessers eines thermoplastischen Polymers
Dispositif de contrôle de l'épaisseur radiale d'extrusion de polymères thermoplastiques

(30) Priority: 25.09.1990 IT 2156890
(43) Date of publication of application: 08.04.1992
(73) Proprietor: S.T. Soffiaggio Tecnica S.r.l., I-20052 Monza (MI) (IT)
(72) Inventor: Tietto, Mario, I-20092 Cinisello Balsamo (Milano) (IT)
(74) Representative: Forattini, Amelia

(56) References cited:
- EP-A- 0 158 919
- DE-A- 2 654 001
- DE-A- 2 823 999
- DE-A- 3 301 248
- FR-A- 2 343 577
- US-A- 4 432 718
- PATENT ABSTRACTS OF JAPAN vol. 11, no. 281 (M-624)(2728) 11 September 1987 & JP-A-62 080 009 (ISHIKAWAJIMA HARIMA HEAVY IND CO LTD) 13 April 1987
- PATENT ABSTRACTS OF JAPAN vol. 9, no. 80 (M-370)(1803) 10 April 1985 & JP-A-59 209 122 (NIPPON SEIKOSHO K.K.) 27 November 1984
- PATENT ABSTRACTS OF JAPAN vol. 11, no. 50 (M-562)(2497) 17 February 1987 & JP-A-61 213 107 (ISHIKAWAJIMA HARIMA HEAVY IND CO LTD) 22 September 1986

## Description

The present invention relates to a device for extruding thermoplastic polymers so as to produce a tubular element which has a variable radial thickness along its circumference. The invention further-more relates to an apparatus for manufacturing blown hollow bodies starting from the thermoplastic tubular element. More particularly, the field of the present invention relates to an extrusion head which is fed, for example, by a screw feeder which melts the polymer and feeds it into the extrusion head. Said extrusion head ends, downstream, with an annular extrusion nozzle which has an annular passage having a variable thickness, so as to determine the required longitudinal thickness of the tubular element made of thermoplastic material.

The tubular element thus produced has not set yet and can thus be blown until it reaches the dimensions of the mold, so as to produce hollow bodies, such as for example cans, car tanks, etc.

The longitudinal thickness of the tubular element, which depends on the thickness which the finished hollow body must have, is adjusted by axially moving the so-called male element of the nozzle.

The above is, in summary, the main field of industrial use of the invention, but said field does not constitute a limitation of the scope thereof, since the device and the apparatus according to the invention, in particular as described and claimed hereinafter, can be advantageously used in any other equivalent field in which operations for blowing thermoplastic polymers must be per-formed.

Devices and apparatuses of this type are known, but it has been observed that with them the thickness of the finished hollow body narrows proximate to the corners due to obvious reasons of spreading during blowing.

In order to overcome this disadvantage, it has been suggested to modify the profile of the male element or of the female element of the nozzle, so as to increase the passage thickness proximate to the regions of the tubular element which will form the corners of the finished hollow body. However, it has been observed that this solution is suitable only if it is necessary to always produce the same type of hollow body, whereas it is inadequate when the type of hollow body to be produced must be modified often, in particular when hollow bodies with corners arranged in a different position must be produced. In this case, in fact, it would be necessary to modify the male element of the nozzle every time the production type changes. In this manner it is furthermore not possible to adjust radial thickness variations localized in particular longitudinal regions along the tubular element to be blown, since a similar deformation is present along the entire length of the tube. The same occurs according to the teachings of DE 3301248 and Patent Abrastract of Japan, Vol. 9, No. 80 (M-370) (1803) which involve a permanent deformation of the tubular element.

It has furthermore been observed that preferential pathways of the polymer develop with this solution; said pathways are faster, so that the tube becomes deformed and tends to collapse onto itself and stick, thus making subsequent blowing impossible.

DE-A-26 54 001, corresponding to US 4 279 857 discloses a device for extruding tubular elements, in which the annular passage of the polymer can be adjusted by an axial movement of two cooperating bodies, that, in a sectional elevation view, are both convex.

Other known apparatuses are manufactured by MOOG GMBH in Böblingen and have a deformable ring arranged proximate to the nozzle. Said ring is deformed by two or four hydraulic servo-jacks which allow to decrease the cross-section of the tubular element by an amount which can be adjusted as required.

It has been observed that said deformable ring has some problems; first of all, many cases of fatigue breakage after a certain number of deformations have been observed; furthermore, said ring does not deform adequately when the diameter is smaller than 100 mm or when the diameter is larger than 300 mm. Furthermore, every time the nozzle is changed in order to change the tube diameter, the deformable ring must also be changed. This entails considerable costs, since it is necessary to provide a plurality of deformable rings with various diameters, each of which, being sophisticated and delicate, is very expensive.

The aim of the present invention is therefore to overcome the above disadvantages by providing a device which allows to extrude a tubular element which has an increased thickness at the corners of the finished hollow body, with a simple, economical and reliable solution which allows great durability without breakage.

Another object of the invention is to allow to adjust the longitudinal thickness of the tubular element independently of the adjustment of the radial thickness, so that the thickness of every particular shape of finished hollow body can be optimal in each part of the body.

Another object of the invention is to allow to vary the diameter of the nozzle without thereby having to also replace the means which allow to increase the thickness of the tubular element at the corners of the finished hollow body.

According to the invention, this aim, these objects and others are achieved by a device according to claim 1.

It has in fact been observed that the annular extrusion nozzle does not eliminate the thickness variations introduced by the upstream annular passage, since the thermoplastic material retains a memory which allows it to reacquire, after constantthickness extrusion, the original shape imparted thereto by the annular passage.

In other words, the thickness set by the axial position of the so-called male element sets a sort of average thickness of the tubular element. The real thickness can instead he varied according to what is determined by the upstream annular passage and is stored in the intrinsic memory of the thermoplastic polymer. In this manner, the average radial thickness of the tubular element and the thickness of the enlarged regions at the corners of the finished hollow body can be adjusted independently.

The outer body and the inner body are formed by interchangeable pre-shaped rings. In this manner, by replacing the rings it is possible to vary, with a very simple and economical means, the relative position of the thickness increases of the tubular element, so as to pass for example from the production of square hollow bodies to the production of rectangular hollow bodies. Each series of square hollow bodies, or of rectangular hollow bodies, can naturally be produced in all sizes, with a tubular element diameter either lower than 100 mm or higher than 300 mm, without changing the shaped rings but simply by changing the diameter of the nozzle.

Preferably, the inner body and/or the outer body have a conical shape, particularly in the region at which the radial thickness variations are performed. It has been observed that in this manner it is possible to adjust the extent of the variation in radial thickness in a more precise manner.

The apparatus for manufacturing blown hollow bodies starting from a thermoplastic tubular element comprises the above described device and furthermore comprises known means, such as a screw feeder, for feeding and melting the polymer, the means for blowing the tubular element, the outer mold into which the hollow body is to be blown, etc.

The present invention will become apparent with reference to the accompanying drawings, given only by way of non-limitative example and wherein:
Fig. 1 is a partially sectional elevation view of the device according to the known art;
Fig. 2 is a sectional plan view of the tubular element obtained with the device of Fig. 1;
Fig. 3 is a sectional elevation view of the inner body and of the outer body, taken at the annular passage;
Fig. 4 is a sectional plan view taken along the sectional plane IV-IV of Fig. 3;
Fig. 5 is a sectional plan view taken along the sectional plane V-V of Fig. 3;
Fig. 6 is a sectional plan view taken along the sectional plane VI-VI of Fig. 3;
Fig. 7 is a sectional elevation view taken along the sectional plane VII-VII of Fig. 3;
Fig. 8 is a detailed sectional elevation view taken along the sectional plane VIII-VIII of Figs. 4, 5 and 6;
Fig. 9 is a sectional elevation view of the inner body, of the outer body and of the annular passage;
Fig. 10 is a sectional plan view taken along the sectional plane X-X of Fig. 9;
Fig. 11 is a sectional plan view taken along the sectional plane XI-XI of Fig. 9;
Fig. 12 is a sectional plan view taken along the sectional plane XII-XII of Fig. 9;
Fig. 13 is a sectional elevation view taken along the sectional plane XIII-XIII of Fig. 9;
Fig. 14 is a detailed sectional elevation view taken along the sectional plane XIV-XIV of Figs. 10, 11 and 12;
Fig. 15 is a view of the tubular element according to the invention with its thickness increased at the corners of the hollow body;
Fig. 16 is a sectional view of the hollow body obtained with the tubular element of Fig. 15;
Fig. 17 is a sectional plan view of the tubular element with its thickness increased at the corners of the hollow body;
Fig. 18 is a sectional view of the hollow body obtained with the tubular element of Fig. 17;
Fig. 19 is a sectional plan view of the tubular element according to the known art;
Fig. 20 is a sectional view of the hollow body obtained with the tubular element of Fig. 19;
Fig. 21 is a sectional plan view of the tubular element according to the known art;
Fig. 22 is a sectional view of the hollow body obtained with the tubular element of Fig. 21.

With reference to the above Figs. 3 to 18, the device according to the invention for manufacturing the tubular element 10 comprises an inner body 11 and an outer body 12 which are arranged so as to define, between them, an annular passage 13 for the melted polymer.

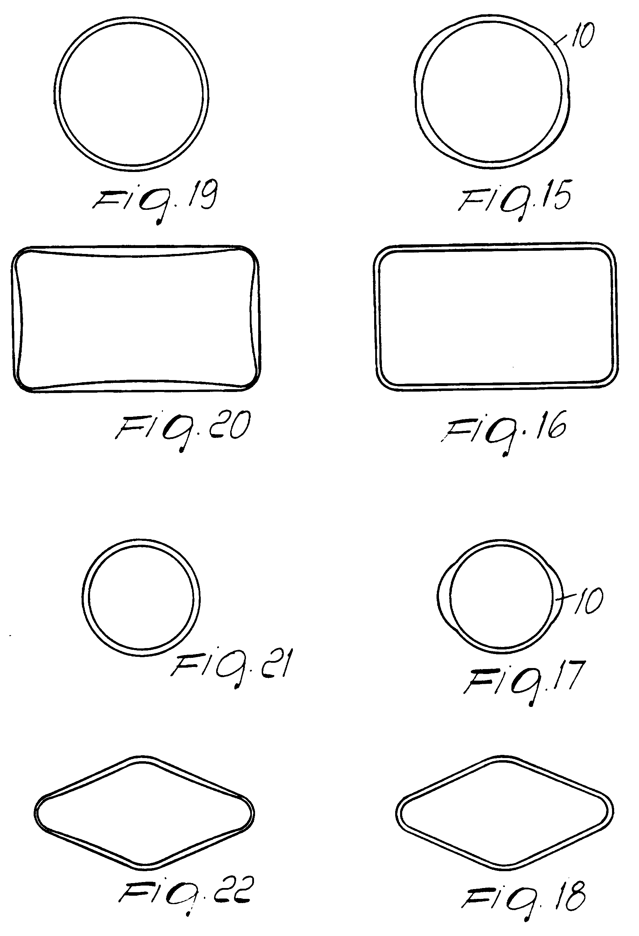

Relative axial sliding between the inner body and the outer body is allowed, for example with reference to Figs. 8 and 14, by the axial movement of the outer body, whereas the inner body remains motionless, this solution is preferred but the reverse solution would naturally be equivalent.

The relative configuration of the inner and outer bodies depends on the particular radial thickness profile which must be obtained for the tubular element, in relation to the particular hollow body to be blown; in particular, with reference to Figs. 3-12, the shapes of the inner and outer bodies vary from circular to elliptical and back to circular along the annular passage. When the relative axial position of the inner body and of the outer body is the first one, which is the one indicated in Figs. 3, 4, 5, 6 and 7, the annular passage has a substantially constant thickness along its entire perimeter, along a transverse cross-section. Instead, when the relative axial position of the outer body and of the inner body is the second one, which is the one illustrated in Figs. 9, 10, 11, 12 and 13, the thickness of the annular passage varies along a transverse cross-section, as is particularly evident in the cross-sectional view of Fig. 11, producing a tubular element such as the one illustrated in Fig. 17. From the tubular element of Fig. 17 it is then possible to blow a hollow body, such as the one of Fig. 18, with constant thickness.

With other configurations of the inner body and of the outer body it is possible to produce a tubular element such as the one of Fig. 15, for blowing rectangular bodies such as the one of Fig. 16.

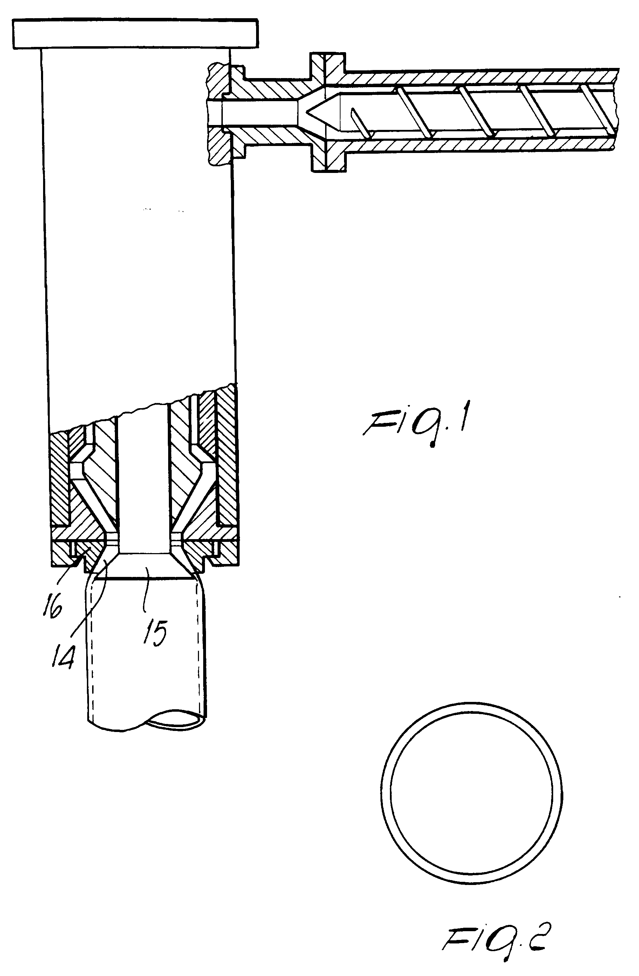

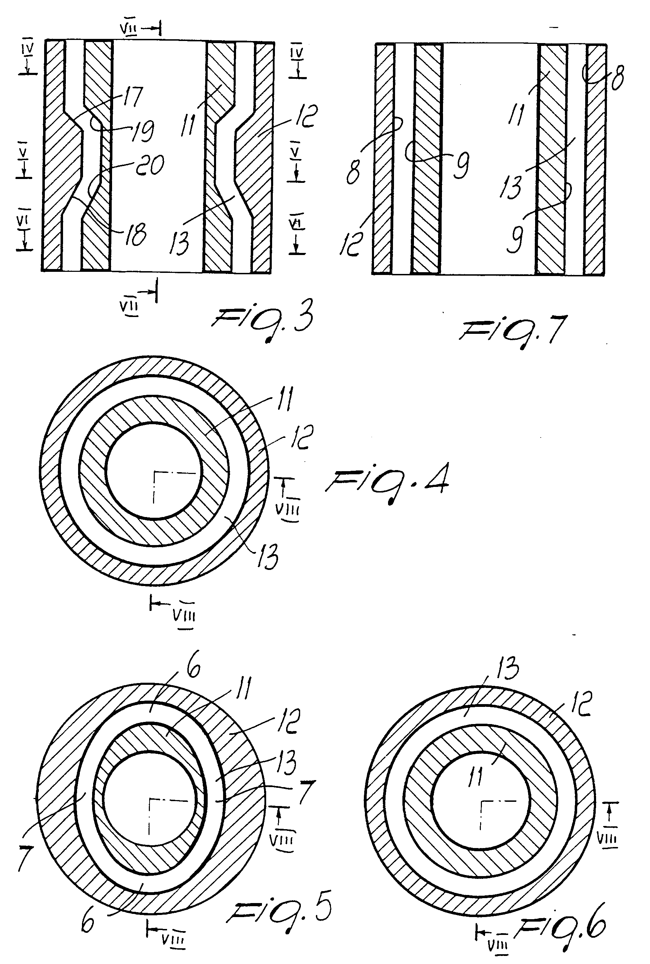

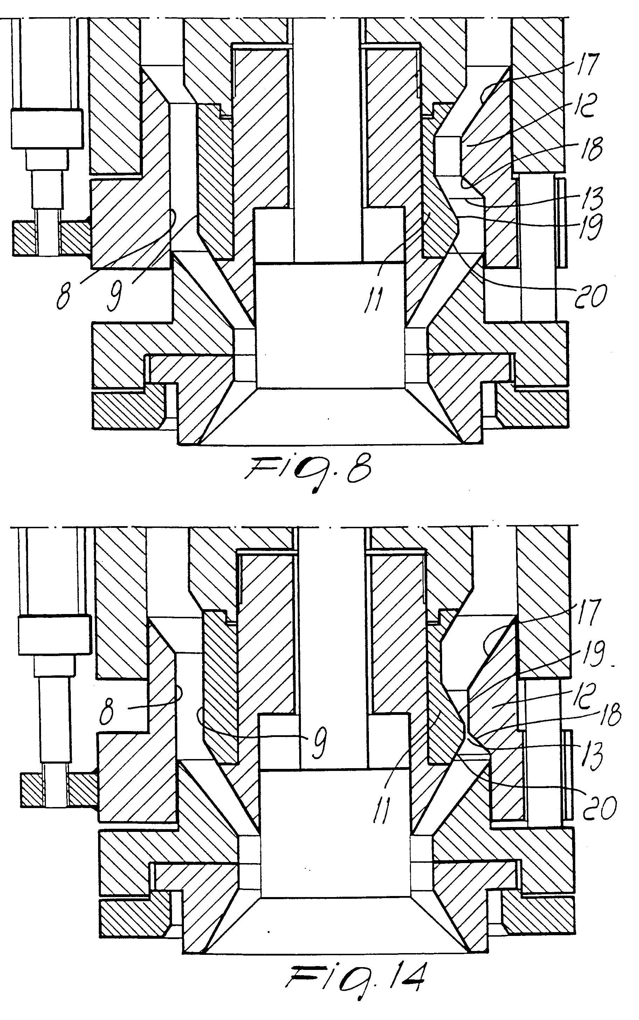

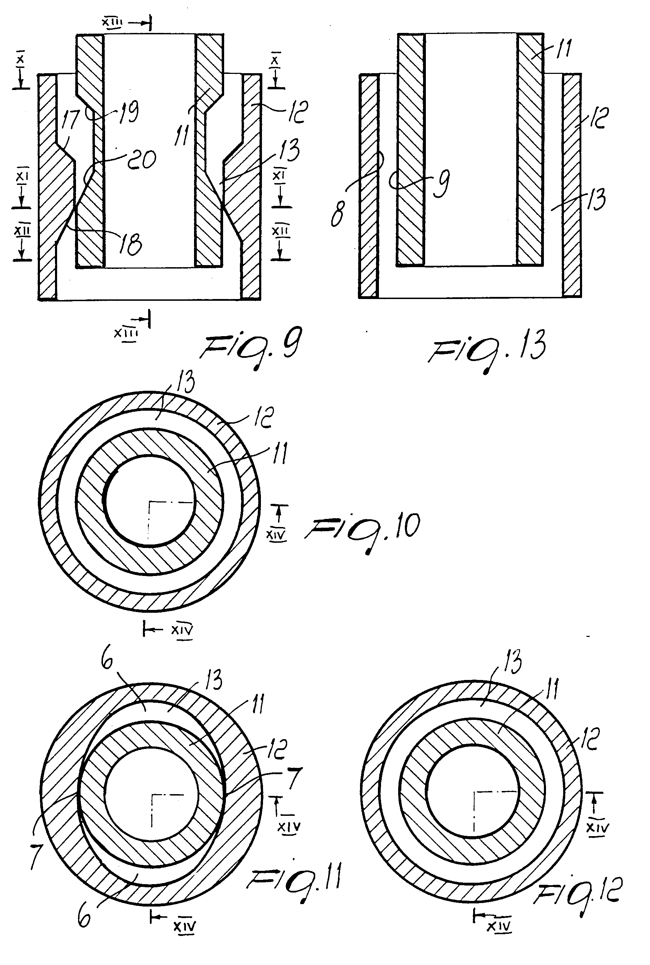

With reference to Figs. 1 and 2, according to the known art, the nozzle 14, which is composed of the male element 15 and of the female element 16, allows to vary the thickness of the tubular element according to the average thickness to be obtained.

Figs. 19 and 21 illustrate tubular elements with constant cross-section according to the known art and the corresponding hollow bodies 20 and 22 obtained, which have a reduced thickness proximate to the corners due to spreading problems, thus giving rise to weakness indeed in the points which would instead require greater resistance to stresses. By means of this known method, in fact, in order to obtain an adequate thickness in the corners it was necessary to oversize the overall average thickness of the hollow body.

The invention instead allows to perfectly adjust the thickness of each corners as required, even performing practical tests and changing the thickness without difficulty according to the results obtained.

In this manner it is possible to optimize the average thickness of the hollow body, reducing the amount of polymeric material required, obtaining much lighter hollow bodies for an equal final strength. In fact the corners of the finished hollow body are the parts more stressed during the use.

With reference to Figs. 8 and 14, the outer body 12 and the inner body 11 are each formed by a pre-shaped and interchangeable ring; by changing said rings it is possible to vary the position of the thickness increases in a particularly simple and economical manner.

With reference to Figs. 3, 8, 9 and 14, the inner body and the outer body have a conical profile, in the regions 17, 18, 19 and 20, at the thickness variations of the annular passage.

The invention is susceptible to numerous variations, all of which are within the scope of the inventive concept; thus, for example, it is possible to change the position of the rings, by mounting the inner body on the male element and the outer body on the female element of the nozzle, using the movement for varying the longitudinal thickness to also vary the relative position of the inner and outer bodies. Although it renounces the independent adjustment of the two movements, this solution allows an execution which is satisfactory for many users.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Device for extruding thermoplastic polymers so as to produce a tubular element (10) suitable for being blown and having radial thickness which can vary along the circumference, characterized in that said device comprises an inner interchangeable pre-shaped ring (11) and an outer interchangeable pre-shaped ring (12) which are arranged so as to define, between them, an annular passage (13) for the melted polymer;
said inner interchangeable pre-shaped ring (11) and said outer interchangeable pre-shaped ring (12) being coupled so as to allow a relative and adjustable axial movement with respect to one another;
said inner interchangeable pre-shaped ring (11) and said outer interchangeable pre-shaped ring (12) being shaped with respect to one another so that said axial movement allows to vary the thickness of some preset regions (7) of said annular passage (13), along a sectional plan view transverse to said annular passage, with respect to the thickness of other regions (6) of said annular passage (13), along the same sectional plan view;
in correspondence of said preset regions (7) of said annular passage (13) one of said rings is convex (17, 18) and the other one is concave (19), along a sectional elevation view;
in correspondence of said other regions (6) of said annular passage (13) both of said rings are straight (8,9), along a sectional elevation view;
so that in a certain relative axial position of said inner interchangeable pre-shaped ring (11) with respect to said outer interchangeable pre-shaped ring (12), said annular passage (13) has a substantially constant thickness along its entire perimeter;
an annular extrusion nozzle (14) being arranged after said annular passage (13).

2. Device according to claim 1 wherein said inner interchangeable pre-shaped ring (11) and/or said outer interchangeable pre-shaped ring are conical, at least in some regions (17, 18, 19, 20).

3. Device according to at least one of the preceding claims wherein the shape of said inner interchangeable pre-shaped ring (11) and/or said outer interchangeable pre-shaped ring (12) is substantially circular on a first sectional plan view, and is substantially elliptical on a second sectional plan view arranged below said first sectional plan view.

4. Device according to claim 3 wherein the shape of said inner interchangeable pre-shaped ring (11) and/or said outer interchangeable pre-shaped ring (12) is substantially circular on a third sectional plan view arranged below said second sectional plan view.

5. Apparatus for manufacturing blown hollow bodies starting from a thermoplastic tubular element, comprising a device according to anyone of the preceding claims.

## Patentansprüche

1. Einrichtung zum Extrudieren thermoplastischer Polymere, um ein zum Aufblasen geeignetes rohrörmiges Element (10) mit einer entlang des Umfanges veränderbaren Dicke herzustellen, dadurch gekennzeichnet, daß die Einrichtung einen inneren, austauschbaren, vorgeformten Ring (11) und einen äußeren, austauschbaren, vorgeformten Ring (12) aufweist, die so angcordnet sind, daß sie zwischen sich einen ringförmigen Durchlaß (13) für das geschmolzene Polymer begrenzen;
der innere; austauschbare, vorgeformte Ring (11) und der äußere, austauschbare, vorgeformte Ring (12) so gekoppelt sind, daß zwischen ihnen eine relative und einstellbare, axiale Bewegung möglich ist;
der innere, austauschbare, vorgeformte Ring (11) und der äußere, austuaschbare, vorgeformte Ring (12) relativ zueinander derart geformt sind, daß es die axiale Bewegung ermöglicht, die Dicke einiger vorgegehener Bereiehe (7) des ringförmigen Durchlasses (13) entlang eines ebenen Schnittes, transversal zu dem ringförmigen Durchlaß, in bezug auf die Dicke anderer Bereiche (6) des ringförmigen Durchlasses (13) entlang des gleichen ebenen Schnittes zu verändern;
in Übereinstimmung mit den vorgegebenen Bereichen (7) des ringförmigen Durchlasses (13) entlang eines Vertikalschnittes einer der Ringe konvex (17,18) und der andere konkav (19) ist;
in Übereinstimmung mit den anderen Bereichen (6) des ringförmigen Durchlasses (13) beide Ringe (8,9) entlang eines Vertikalschnittes gerade sind;
so daß in einer gewissen relativen axialen Position des inneren austauschbaren vorgeformten Ringes (11) in bezug auf den äußeren austauschbaren vorgeformten Ring (12) der ringförmige Durchlaß (13) eine im wesentlichen konstante Dicke entlang seines ganzen Umfangs hat;
hinter dem ringförmigen Durchlaß (13) eine ringförmige Extrusionsdüse (14) angeordnet ist.

2. Einrichtung nach Anspruch 1, bei weleher der innere, austauschbare, vorgeformte Ring (11) und/oder der äußere, austauschbare, vorgeformte Ring (12) zumindest in einigen Bereichen (17, 18, 19, 20) konisch sind.

3. Einrichtung nach mindestens einem der vorhergehenden Ansprüche, bei welcher die Form des inneren, austauschbaren, vorgeformten Ringes (11) und/oder des äußeren, austauschbaren, vorgeformten Rings (12) in einem ersten ebenen Schnitt im wesentlichen kreisförmig, in einem zweiten, unter dem ersten ebenen Schnitt gelegenen ebenen Schnitt im wesentlichen ellipsenförmig ist

4. Einrichtung nach Anspruch 3, bei weleher dic Form des inneren, austauschbaren, vorgeformten Ringes (11) und/oder des äußeren, austauschbaren, vorgeformten Ringes (12) in einem dritten, unter dem zweiten ebenen Schnitt gelegenen ebenen Schnitt im wesentlichen kreisförming ist

5. Vorrichtung zur Herstellung geblasener Hohlhörper aus einem thermoplastischen, rohrförmigen Element, enthaltend eine Einrichtung nach einem der vorhergehenden Ansprüche.

## Revendications

1. Dispositif pour l'extrusion de polymères thermoplastiques pour produire un élément tubulaire (10) propre à être soufflé et ayant une épaisseur radiale qui peut varier sur sa circonférence, caractérisé en ce que le dispositif comprend un anneau intérieur (11) interchangeable et préformé et un anneau extérieur (12) interchangeable et préformé, qui sont disposés de manière à définir entre eux un passage annulaire (13) pour le polymère fondu ;
ledit anneau intérieur (11) interchangeable et préformé et ledit anneau extérieur (12) interchangeable et préformé étant reliés de manière à permettre un mouvement axial relatif de l'un par rapport à l'autre ;
ledit anneau intérieur (11) interchangeable et préformé et ledit anneau extérieur (12) interchangeable et préformé étant conformés l'un par rapport à l'autre de telle sorte que ledit mouvement axial permet de modifier l'épaisseur de certaines zones préréglées (7) dudit passage annulaire (13), selon une vue en plan et en coupe transversale par rapport audit passage annulaire, par rapport à l'épaisseur d'autres régions (6) dudit passage annulaire (13), le long de la même vue en plan et en coupe ;
d'une manière correspondant auxdites régions prédéterminées (7) dudit passage annulaire (13), l'un desdits anneaux est convexe (17, 18) et l'autre est concave (19), dans une vue en élévation et en coupe ;
d'une manière correspondant auxdites autres régions (6) dudit passage annulaire (13), lesdits deux anneaux sont rectilignes (8, 9), selon une vue en élévation et en coupe ;
de sorte que dans une certaine position axiale relative dudit anneau intérieur (11) interchangeable et préformé par rapport audit anneau extérieur (12) interchangeable et préformé, ledit passage annulaire (13) possède une épaisseur sensiblement constante sur l'ensemble de son pourtour ;
une buse annulaire d'extrusion (14) étant disposée après ledit passage annulaire (13).

2. Dispositif selon la revendication 1, dans lequel ledit anneau intérieur (11) interchangeable et préformé et/ou ledit anneau extérieur interchangeable et préformé sont coniques, au moins dans certaines régions (17, 18, 19, 20).

3. Dispositif selon au moins l'une des revendications précédentes, dans lequel la forme dudit anneau intérieur (11) interchangeable et préformé et/ou dudit anneau extérieur (12) interchangeable et préformé est sensiblement circulaire dans une première vue en plan et en coupe, et est sensiblement elliptique dans une seconde vue en plan et en coupe située au-dessous de ladite première vue en plan et en coupe.

4. Dispositif selon la revendication 3, dans lequel la forme dudit anneau intérieur (11) interchangeable et préformé et/ou dudit anneau extérieur (12) interchangeable et préformé est sensiblement circulaire dans une troisième vue en plan et en coupe située au-dessous de ladite seconde vue en plan et en coupe.

5. Appareil pour la fabrication de corps creux souffles à partir d'un élément tubulaire thermoplastique, comprenant un dispositif selon l'une quelconque des revendications précédentes.
